# EUROPEAN PATENT SPECIFICATION

(11) **EP 4 276 930 B1**
(45) Date of publication and mention of the grant of the patent: **11.03.2026**
(21) Application number: 22897353.3
(22) Date of filing: 26.09.2022
(51) Int. Cl.: H01M 4/04, H01M 10/04

(54) **POLE PIECE FORMING APPARATUS**
POLESTÜCKENBILDUNGSVORRICHTUNG
DISPOSITIF DE FORMATION D'ÉLÉMENT DE PÔLE

(30) Priority: 29.11.2021 CN 202111450643
(43) Date of publication of application: 15.11.2023
(73) Proprietor: Contemporary Amperex Technology (Hong Kong) Limited, Central, Central And Western District (HK)
(72) Inventor: XIE, Bin, Ningde, Fujian 352100 (CN); CHEN, Shitong, Ningde, Fujian 352100 (CN); LU, Yi, Ningde, Fujian 352100 (CN); SHEN, Yuanyuan, Ningde, Fujian 352100 (CN); LI, Keqiang, Ningde, Fujian 352100 (CN); ZHAO, Fenggang, Ningde, Fujian 352100 (CN)
(74) Representative: Ran, Handong
(86) International application number: PCT/CN2022/121227
(87) International publication number: WO 2023/093267

(56) References cited:
- WO-A1-2021/098539
- CN-A- 106 505 180
- CN-A- 110 676 426
- CN-A- 110 676 426
- CN-A- 110 899 336
- CN-A- 111 293 277
- CN-U- 202 114 192
- CN-U- 203 410 045
- CN-U- 204 809 311
- CN-U- 209 614 595
- CN-U- 210 418 532
- CN-U- 210 418 532
- JP-A- 2016 018 647

## Description

### TECHNICAL FIELD

The present disclosure relates to the technical field of pole piece processing, in particular to a pole piece forming apparatus.

### BACKGROUND

Batteries are widely used in electrical devices, such as mobile phones, notebook computers, battery cars, electric cars, electric planes, electric ships, electric toy cars, electric toy ships, electric toy planes and electric tools. Batteries can include nickel-cadmium batteries, nickel-hydrogen batteries, lithium-ion batteries and secondary alkaline zinc-manganese batteries.

In the development of battery technology, pole piece is an important part of battery. It is a matter of continuous improvement in battery technology to ensure the smooth progress of various processes in the production process of pole piece, reduce the rejection rate in the production process of pole piece and improve the product quality of pole piece.

CN110676426A provides a battery pole sheet rolling device, comprising an unwinding assembly, a slitting assembly, a rolling assembly, a roller assembly and a winding assembly sequentially connected to one another. The slitting assembly comprises a slitting blade shaft and a plurality of slitting blades arranged on the slitting blade shaft. The rolling assembly comprises an upper pressing roller and a lower pressing roller arranged below the upper pressing roller.

### SUMMARY

The present invention provides a pole piece forming apparatus, which can improve the product quality of the pole piece and reduce the rejection rate in the production process of the pole piece.

The present invention provides a pole piece forming apparatus according to claim 1. Aspects of the invention are set out in the dependent claims.

In the pole piece forming apparatus provided, the wrinkle removing device is arranged between the slitting device and the winding devices, and the wrinkle removing device is arranged including the first roller and the second roller that are provided opposite to each other, and the slitting edges of the pole pieces are rolled by the first rolling part of the first roller and the second roller, so that the risk of wrinkling of the pole pieces formed after slitting the master pole piece is effectively reduced, the yield of the pole piece is improved, and the safety of the battery produced from the pole pieces in the working process is improved.

A diameter of the first rolling part is changed from small to large in an axial direction of the first roller, and a portion with a largest diameter of the first rolling part is used for rolling the edge of the slitting edge; a portion with a smaller diameter of the first roller is closer to a middle position of the pole piece. With this arrangement, the edge of the slitting edge prone to wrinkles can be rolled by the portion with the largest diameter of the first rolling part. The stress distribution at the slitting edge of the pole piece is more uniform after being rolled by the wrinkle removing device, which is beneficial to improve the wrinkle removing effect of the pole piece.

In some examples, the diameter of the first rolling part is changed from small to large by an arc transition structure or a step transition structure. Both the arc-shaped transition structure and the step transition structure can achieve the purpose of increasing the diameter of the first rolling part from small to large.

In some examples, in the axial direction of the first roller, the diameter of the first rolling part first is changed from small to large and then is changed from large to small. With this arrangement, it is possible to make one rolling part correspond to the edges of the slitting edges of two pole pieces, thereby simplifying the structure of the wrinkle removing device. At the same time, the rolling force of the wrinkle removing device on the pole piece gradually decreases from the edge of the slitting edge to the middle of the pole piece, so that the stress distribution of the slitting edge of the pole piece after passing through the wrinkle removing device is more uniform, and the risk of wrinkling of the pole piece is further reduced.

In some examples, the second roller includes a second rolling part opposite the first rolling part, and a diameter of the second rolling part is changed from small to large in an axial direction of the second roller; and a portion with a largest diameter of the second roller is opposite to the portion with the largest diameter of the first roller. The first rolling part and the second rolling part can be provided with the same shape, and both are arranged opposite to each other. With this arrangement, when the wrinkle removing device rolls the slitting edge of the pole piece, the force on the two side surfaces of the pole piece is more balanced, and the space for stress release along the two sides of the pole piece in the wrinkle removing process is consistent, which is beneficial to the smooth progress of the wrinkle removing work of the pole piece and reduces the possibility of wrinkling again of the pole piece in the rolling process.

In some examples, the first roller is internally provided with a flow path for circulating a heat conductive medium, the heat conductive medium being used for heat exchange with the first roller. Therefore, it is convenient to better remove the winkles of the slitting edges of the pole pieces. In addition, for the pole pieces after lithium replenishment, the active substances can be accelerated to embed into the pole pieces by heating the pole pieces by the first roller.

**In** some examples, the heat conductive medium exchanges heat with the first roller to maintain a surface temperature of the first roller adjacent to the pole piece between 35°C and 40°C. With this arrangement, the possibility that the structure of the pole pieces is damaged due to excessive temperature of the pole pieces can be reduced while the stress reloading process of the pole pieces can be ensured, and the embedding of active materials into the pole piece can be accelerated.

**In** some examples, the flow path is helically arranged about a centerline of the first roller. The helically arranged flow path has a larger area corresponding to an outer surface of the first roller, which is beneficial to improve the heat exchange rate between the heat conductive medium and the first roller.

In some examples, a distance between the flow path and an outer surface of the first roller is d, where 0<d ≤ 2 mm. Thus, the heat exchange rate between the heat conductive medium and the outer surface of the first roller can be increased, and thus the heat exchange rate between the first roller and the pole piece can be increased.

In some examples, the pole piece forming apparatus further includes: a lithium replenishment device arranged between the incoming device and the slitting device, the lithium replenishment device being used for cladding a lithium strip to a surface of the master pole piece. Integrating the lithium replenishment and slitting process of pole pieces into the pole piece forming apparatus can improve the structural integration of the pole piece forming apparatus and simplify the operation procedures in the pole piece forming process.

In some examples, the pole piece forming apparatus further includes a deflection correcting device for guiding a transport direction of the pole pieces; the deflection correcting device is arranged between the slitting device and the wrinkle removing device; and/or, the deflection correcting device is arranged between the wrinkle removing device and the winding devices. This arrangement has better wrinkle removing effect and reduces the possibility of secondary wrinkles after the pole piece wrinkle removing process is completed.

In some examples, the pole piece forming apparatus further includes a burr treatment device disposed between the slitting device and the winding devices, the burr treatment device including: a brush mechanism for removing burrs of the slitting edges; and a dust collecting mechanism for collecting burrs removed by the brush mechanism. It reduces the risk that burrs flow arbitrarily and affect the cleanliness of the pole piece production environment, and at the same time, it can reduce the risk that burrs fall on the surface of the pole piece and puncture the pole piece during the subsequent processing of the pole piece.

In some examples, the pole piece forming apparatus further includes: a glue application mechanism disposed between the burr treatment device and the winding devices, for applying glue to the slitting edges; and a drying device arranged between the glue application mechanism and the winding devices, for drying the pole piece after glue application. Therefore, the slitting edges of the pole pieces can be avoided from being exposed, and the risk of short circuit of subsequent pole pieces in use can be reduced.

### BRIEF DESCRIPTION OF DRAWINGS

In order to more clearly illustrate the technical solutions in examples of the present disclosure, the following will briefly introduce the drawings that are desired to be used in the description of the examples. Obviously, the drawings in the following description are merely some examples of the present disclosure, from which other drawings may be obtained without exerting inventive effort by those ordinarily skilled in the art.
FIG. 1 is a schematic structure diagram of a pole piece forming apparatus provided by the present disclosure;
FIG. 2 is a schematic structure diagram of rolling a pole piece by a first roller and a second roller in the pole piece forming apparatus provided by examples of the present disclosure;
FIG. 3 is a schematic structure diagram of rolling a pole piece by the first roller and the second roller in another pole piece forming apparatus provided by examples of the present disclosure;
FIG. 4 is a schematic structure diagram of rolling a pole piece by the first roller and the second roller in yet another pole piece forming apparatus provided by examples of the present disclosure;
FIG. 5 is a schematic sectional view of the first roller in the pole piece forming apparatus provided by examples of the present disclosure;
FIG. 6 is a structural schematic diagram of another pole piece forming apparatus provided by examples of the present disclosure;
FIG. 7 is a structural schematic diagram of yet another pole piece forming apparatus provided by examples of the present disclosure;
FIG. 8 is a structural schematic diagram of still another pole piece forming apparatus provided by examples of the present disclosure.

In the drawings, the drawings are not necessarily drawn to actual scale.

Illustration of reference signs:
1. incoming device; 2. slitting device; 3. wrinkle removing device; 31. first roller; 31a. first rolling part; 31b. flow path; 32. second roller; 32a. second rolling part; 4. winding devices; 5. lithium replenishment device; 51. lithium strip unwinding mechanism; 52. release agent coating mechanism; 53. press roller mechanism; 54. traction film winding mechanism; 6. deflection correcting device; 7. burr treatment device; 71. brush mechanism; 72. dust collecting mechanism; 8. glue application mechanism; 9. drying device;
110. master pole piece; 120. pole piece; 120a. slitting edge.

### DETAILED DESCRIPTION OF EMBODIMENTS

Embodiments of the present disclosure are described in further detail below with reference to the accompanying drawings and embodiments. The following detailed description of the embodiments and the accompanying drawings are used for exemplary illustration of the principles of the present disclosure, but are not intended to limit the scope of the claimed invention defined by the appended claims.

In the description of the present disclosure, it should be noted that, unless otherwise stated, "multiple" means more than two. The terms "up," "down," "left," "right," "inside," "outside" and the like indicate orientations or positional relationships for ease of description of the present application and simplification of the description only and are not intended to indicate or imply that the device or element in question is required to have a particular orientation, be constructed and operate in a particular orientation and therefore cannot be construed as limiting to the present application. In addition, the terms of "first," "second," "third," or the like are for descriptive purposes only and cannot be construed as indicating or implying relative importance. "Perpendicular" is not vertical in the strict sense, but within the allowable range of errors. "Parallelism" is not parallel in the strict sense, but within the allowable range of errors.

The locative words appearing in the following description are all directions shown in the figure and are not intended to limit the specific structure of the present disclosure. In the description of the present disclosure, it should be noted that the terms "install", "connect", "couple" and the like are to be understood in a broad sense, unless otherwise expressly specified and limited, for example, it may refer to a fixed connection, may also refer to a detachable connection, or may refer to an integral connection; it may refer to a direct connection or an indirect connection via an intermediate medium. For those ordinarily skilled in the art, the specific meanings of the above terms in the present disclosure will be understood according to the specific circumstances.

Batteries, such as lithium-ion secondary batteries, lithium-ion primary batteries, lithium sulfur batteries, sodium lithium-ion batteries, sodium ion batteries or magnesium ion batteries, etc., have the advantages of high energy density, high power density, multiple recycling times, long storage time, etc., and have been widely used in electrical devices suitable for batteries. For example, the electrical device may be a vehicle, a mobile phone, a portable device, a notebook computer, a ship, a spacecraft, an electric toy, an electric tool, and the like. Vehicles can be fuel vehicles, gas vehicles or new energy vehicles, and new energy vehicles can be pure electric vehicles, hybrid vehicles or extended-range vehicles; spacecrafts include airplanes, rockets, space shuttles and spaceships, etc.; electric toys include fixed or mobile electric toys, such as game machines, electric car toys, electric ship toys, electric plane toys and so on; electric tools include metal slitting electric tools, grinding electric tools, assembly electric tools and railway electric tools, such as electric drills, electric grinders, electric wrenches, electric screwdrivers, electric hammers, impact electric drills, concrete vibrators and electric planers, etc.

In the production process of battery, the pole pieces of battery need to go through coating, rolling, drying, slitting and other processes, and some pole pieces need to be supplemented with lithium.

After the inventor discovered that the edge of the pole piece formed in the production process of the pole piece was wrinkled, the inventor systematically analyzed and studied the forming process and forming apparatus of the pole piece, and found that there was a certain stress in the master pole piece after lithium replenishment, coating or rolling. In the process of slitting the master pole piece to form the pole piece, the stress of the master pole piece at the slitting place will be released instantly, the slitting edge of the pole piece thus formed has no tension, but the stress on the side without passing through the slitting knife is not released. The stress release on both sides of the pole piece thus formed is inconsistent, and the stress distribution on both sides is different, which is easy to cause wrinkling problems such as wave edge, collapse edge or serious sinking of the slitting edge of the pole piece, especially for the pole piece after lithium replenishment process. The master pole piece after lithium replenishment becomes brittle and hard, and the stress difference on both sides of the pole piece formed after slitting is greater, so that the risk of wrinkling of the pole piece is higher.

Based on the above problems discovered by the inventor, the inventor improves the structure of the pole piece forming apparatus, and the technical solution described in the examples of the present disclosure is applicable to the pole piece forming apparatus.

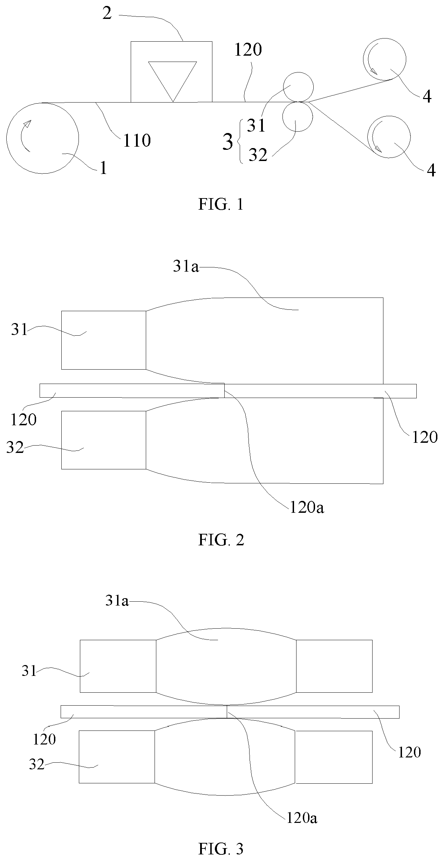

FIG. 1 is a schematic structure diagram of a pole piece forming apparatus provided by examples of the present disclosure, and FIG. 2 shows a schematic structure diagram of a first roller 31 and a second roller 32 with the rolled pole piece 120.

According to the embodiment of the present disclosure, as shown in FIGS. 1 and 2, the pole piece forming apparatus includes an incoming device 1, a slitting device 2, a plurality of winding devices 4 and a wrinkle removing device 3. The incoming device 1 is used to provide a master pole piece 110. The slitting device 2 is used for slitting the master pole piece 110 into a plurality of pole pieces 120. The winding devices 4 are used for transport pulling of the pole pieces 120, respective winding devices 4 wind one corresponding pole piece 120, and the slitting device 2 is arranged between the incoming device 1 and the winding devices 4. The wrinkle removing device 3 is arranged between the slitting device 2 and the winding devices 4. The wrinkle removing device 3 includes a first roller 31 and a second roller 32 that are provided opposite to each other. The first roller 31 includes a first rolling part 31a, and the first rolling part 31a and the second roller 32 are used for rolling the edges of the slitting edges 120a of the pole pieces 120.

Specifically, the slitting device 2 slits the master pole piece 110 into a plurality of pole pieces 120 along the slitting edge 120a of the pole piece 120. After the slitting is completed, the edge of the slitting edge 120a of the pole piece 120 is prone to wrinkles. The first pressing part 31a of the first roller 31 clamps and rolls the edge of the slitting edge 120a of the pole piece 120 together with the second roller 32. During the rolling process, the stress at the edge of the slitting edge 120a of the pole piece 120 is redistributed, and the wrinkles of the slitting edge 120a are flattened.

It will be understood that the configuration and shape of the first roller 31 and the second roller 32 are not limited, and the shapes of the first and second rollers may be the same or different so long as the edge of the slitting edge 120a of the pole piece 120 can be clamped and rolled. Exemplarily, the first roller 31 and the second roller 32 may be cylindrical, frustum-shaped or other irregular shapes, respectively. The first roller 31 and the second roller 32 may roll only the edge of the slitting edge 120a of the pole piece 120, or the entire pole piece 120 may be rolled. Different rolling forms correspond to different configurations of the first roller 31 and the second roller 32.

It should be noted that two or more pole pieces 120 may be formed after the master pole piece 110 is slitted, and one first rolling part 31a correspondingly rolls the edges of two slitting edges 120a of two adjacent pole pieces 120. When the number of pole pieces 120 formed after slitting is more than three, the first roller 31 may be provided with a plurality of first rolling parts 31a so that the edge of each slitting edge 120a has a corresponding first rolling part 31a for rolling. Of course, one first roller 31 may be provided with one first rolling part 31a, and a plurality of first rollers 31 may be provided, each first roller 31 corresponding to the edges of the slitting edges 120a of the two adjacent pole pieces 120.

In the pole piece forming apparatus provided by the embodiment of the present disclosure, the wrinkle removing device 3 is arranged between the slitting device 2 and the winding devices 4, and the wrinkle removing device 3 includes the first roller 31 and the second roller 32 that are provided opposite to each other. The slitting edges 120a of the pole pieces 120 are rolled by the first rolling part 31a of the first roller 31 and the second roller 32, so that the risk of wrinkling of the pole pieces 120 formed after slitting the master pole piece 110 is effectively reduced, the yield of the pole piece 120 is improved, and the safety of the battery produced from the pole piece 120 in the working process is improved.

According to the claimed invention, a diameter of the first rolling part 31a is changed from small to large in an axial direction of the first roller 31, and a portion with a largest diameter of the first rolling part 31a is used for rolling the edge of the slitting edge 120a. A portion with a smaller diameter of the first roller 31 is closer to a middle position of the pole piece 120.

It can be understood that the stress release at the edge of the slitting edge 120a of the pole piece 120 is the most complete, and therefore the amplitude of wrinkling is also the most obvious, and the closer to the edge position of the pole piece 120 is, the more serious the wrinkling of the pole piece 120 is. Therefore, the diameter of the first rolling part 31a is arranged from small to large, and the portion with the largest diameter of the first rolling part 31a is provided for rolling the edge of the slitting edge 120a, so that the roll pressure at the edge of the slitting edge 120a of the pole piece 120 is maximum, and the roll pressure of the first rolling part 31a of the first roller 31 and the second roller 32 on the pole piece 120 gradually decreases from the edge of the slitting edge 120a of the pole piece 120 to the middle area of the pole piece 120. With this arrangement, the edge of the slitting edge 120a prone to wrinkles can be rolled by the portion with the largest diameter of the first rolling part 31a. The stress distribution at the slitting edge 120a of the pole piece 120 is more uniform after being rolled by the wrinkle removing device 3, which is beneficial to improve the wrinkle removing effect of the pole piece 120.

The first rolling part 31a may vary from small to large in a step transition form, a smooth transition form, a plane transition form or the like, without limitation.

In some examples, the diameter of the first rolling part 31a is changed from small to large by an arc-shaped transition structure or a step structure.

The diameter of the first rolling part 31a is changed from small to large by an arc-shaped transition structure, which may be a conical surface, an outward convex arc-shaped surface, or a concave arc-shaped surface, without limitation here. By providing the arc-shaped transition structure, the diameter of the first rolling part 31a can be changed more smoothly, and the rolling force transition of the first rolling part 31a and the second roller 32 on the pole piece 120 can be smoother, which is beneficial to improving the wrinkle removing effect of the wrinkle removing device 3 on the pole piece 120.

In step transition of the first rolling part 31a, a plurality of step surfaces may be provided between the two ends of the first rolling part 31a, and the step height of the step surfaces may be set small enough to avoid damage to the pole piece 120 by the edges of the step surfaces. With this arrangement, the wrinkle removing effect of the wrinkle removing device 3 on the slitting edge 120a of the pole piece 120 can still be achieved.

It can be understood that one first rolling part 31a may correspond to one slitting edge 120a of one pole piece 120 or to two adjacent slitting edges 120a of two adjacent pole pieces 120.

In other examples, as shown in FIG. 3, in the axial direction of the first roller 31, the diameter of the first rolling part 31a is changed from small to large and then is changed from large to small.

It can be understood that the position with the largest diameter of the first rolling part 31a may corresponds to the edges of the slitting edges 120a of the two adjacent pole pieces 120. When the diameter of the first rolling part 31a corresponding to the pole pieces 120 gradually decreases from the edges of the slitting edges 120a of the pole pieces 120 to the middle direction of the pole pieces 120 on both sides, the rolling force of the wrinkle removing device 3 on the pole pieces 120 gradually decreases from the edges of the slitting edges 120a to both sides. With this arrangement, it is possible to make one rolling part correspond to the edges of the slitting edges 120a of two pole pieces 120, thereby simplifying the structure of the wrinkle removing device 3. At the same time, the rolling force of the wrinkle removing device 3 on the pole piece 120 gradually decreases from the edge of the slitting edge 120a to the middle of the pole piece 120, so that the stress distribution of the slitting edge 120a of the pole piece 120 after passing through the wrinkle removing device 3 is more uniform, and the risk of wrinkling of the pole piece 120 is further reduced.

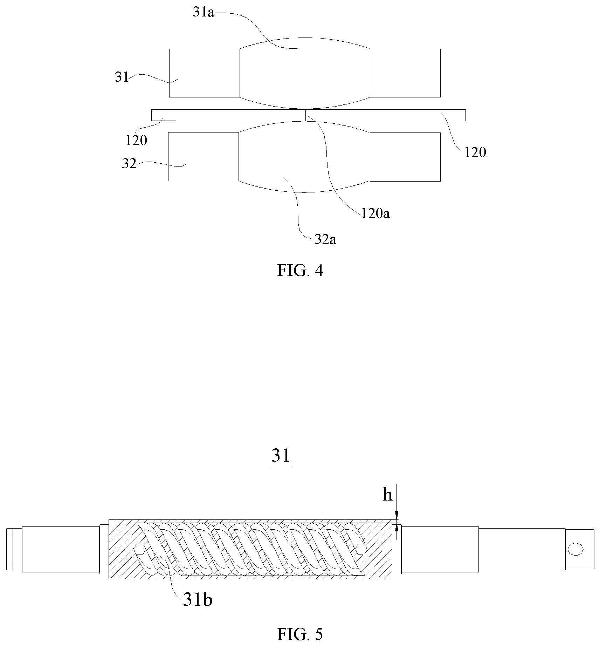

In some examples, as shown in FIG. 4, the second roller 32 includes a second rolling part 32a opposite to the first rolling part 31a, and the diameter of the second rolling part 32a is changed from small to large in the axial direction of the second roller 32. A portion with a largest diameter of the second roller 32 is opposite to the portion with the largest diameter of the first roller 31.

It can be understood that the first rolling part 31a of the first roller 31 may be cylindrical, frustum-shaped or other irregular shapes.

Alternatively, the first rolling part 31a may have the same shape as the second rolling part 32a, and both are arranged opposite to each other. With this arrangement, when the wrinkle removing device 3 rolls the slitting edge 120a of the pole piece 120, the force on the two side surfaces of the pole piece 120 is more balanced, and the space for stress release along the two sides of the pole piece 120 in the wrinkle removing process is consistent, which is beneficial to the smooth progress of the wrinkle removing work of the pole piece 120 and reduces the possibility of wrinkling again of the pole piece 120 in the rolling process.

The first roller 31 and the second roller 32 may roll the slitting edge 120a of the pole piece 120 at room temperature, or may be heated or cooled as required, and there is no limitation here.

In some alternative examples, as shown in FIG. 5, the first roller 31 is internally provided with a flow path 31b. The flow path 31b is used for circulating a heat conductive medium for heat exchange with the first roller 31.

Specifically, the first roller 31 may be heated or cooled by the heat conductive medium in the flow path 31b. As an example, the heat conductive medium in the flow path 31b is used to heat the first roller 31, which heats the pole piece 120 in the process of rolling the pole piece 120, so that the stress reloading process of the slitting edge 120a of the pole piece 120 can be accelerated, and the wrinkles of the pole piece 120 can be better removed. In addition, for the pole pieces 120 after lithium replenishment, the active substances can be accelerated to embed into the pole pieces 120 by heating the pole pieces 120 by the first roller 31.

The heat conductive medium exchanges heat with the first roller 31 to maintain the first roller 31 in a preset temperature range, thereby maintaining the temperature of the pole piece 120 in the wrinkle removing process in the preset range, which can be set according to the specific requirements of the pole piece 120 in the wrinkle removing process.

In some alternative examples, the heat conductive medium exchanges heat with the first roller 31 to maintain a surface temperature of the first roller 31 adjacent to the pole piece 120 between 35°C and 40°C. Specifically, the surface temperature can be 35°C, 38°C, 39°C, or 40°C, etc. With this arrangement, the possibility that the structure of the pole pieces 120 is damaged due to excessive temperature of the pole pieces 120 can be reduced while the stress reloading process of the pole pieces 120 can be ensured, and the embedding of active materials into the pole piece 120 can be accelerated.

The distribution pattern of the flow paths 31b in the first roller 31 is not limited, which may be labyrinth type, hollow cylinder type or other irregular patterns, without limitation here.

In some alternative examples, the flow path 31b is helically arranged about a centerline of the first roller 31.

It can be understood that with the flow path 31b helically arranged about the centerline of the first roller 31, under the condition that the occupied volume of the flow passage 31b is the same, the helically arranged flow path 31b has a larger area corresponding to an outer surface of the first roller 31, which is beneficial to improve the heat exchange rate between the heat conductive medium and the first roller 31.

It can be understood that the smaller the distance between the flow path 31b and the outer surface of the first roller 31, the faster the heat exchange rate between the heat conductive medium in the flow path 31b and the outer surface of the first roller 31. In some alternative examples, the distance between the flow path 31b and the outer surface of the first roller 31 is d, where 0 < d ≤ 2mm. Specifically, d may be 0.5 mm, 1 mm, 1.5 mm or 2 mm or the like. By setting the distance between the flow path 31b and the outer surface of the first roller 31 to satisfy the above-mentioned relationship, the heat exchange rate between the heat conductive medium and the outer surface of the first roller 31 can be increased, and thus the heat exchange rate between the first roller 31 and the pole piece 120 can be increased.

It should be noted that, in some alternative examples, the flow path may be provided inside the second roller 32, and the flow path may be provided spirally about the centerline of the second roller 32, which has the same technical effect as the flow path 31b provided inside the first roller 31, and will not be described here.

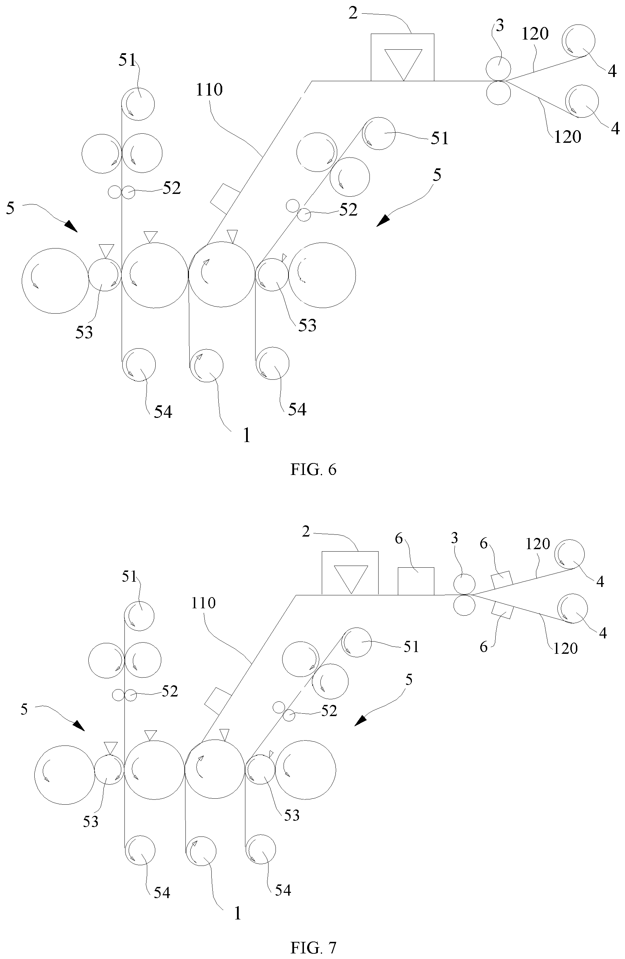

In some examples, as shown in FIG. 6, the pole piece forming apparatus further includes a lithium replenishment device 5. The lithium replenishment device 5 is disposed between the incoming device 1 and the slitting device 2, and the lithium replenishment device 5 is used for cladding the lithium strip to the surface of the master pole piece 110.

Specifically, the lithium replenishment device 5 includes a lithium strip unwinding mechanism 51, a release agent coating mechanism 52, a press roller mechanism 53, and a traction film winding mechanism 54. The release agent coating mechanism 52 coats different kinds of release agents on both sides of the lithium strip so that after the lithium strip passes through the press roller mechanism 53, the lithium strip is rolled and thinned, and lithium chips are adhered to the press roller mechanism 53. The lithium strip is pulled by a traction film winding mechanism 54, and the traction film winding mechanism 54 can wind the traction film in the lithium strip. In the process of rolling the master pole piece 110 by the press roller mechanism 53, the lithium chips are transferred to the surface of the master pole piece 110, and the lithium replenishment process of the master pole piece 110 is completed.

By providing the lithium replenishment device 5, the lithium replenishment and slitting process of pole pieces 120 are integrated into the pole piece forming apparatus, which can improve the structural integration of the pole piece forming apparatus and simplify the operation procedures in the forming process of the pole piece 120.

In some examples, as shown in FIG. 7, the pole piece forming apparatus further includes a deflection correcting device 6. The deflection correcting device 6 is used for guiding a transport direction of the pole pieces 120. By providing the deflection correcting device 6, the possibility of deflection of the pole piece 120 in the transport process can be reduced, so that the yield of the pole piece 120 can be improved.

It can be understood that the deflection correcting device 6 may be provided at an appropriate position as required and there is no limitation here.

In some alternative examples, the deviation correcting device 6 is disposed between the slitting device 2 and the wrinkle removing device 3. In this way, after the pole piece 120 is slitted, the pole piece 120 is corrected, so that the wrinkle removing device 3 can more accurately roll to the edge of the slitting edge 120a of the pole piece 120 in the subsequent wrinkle removing process, thus having a better wrinkle removing effect.

In other examples, the deflection correcting device 6 is arranged between the wrinkle removing device 3 and the winding devices 4. This facilitates the smooth winding of the pole piece 120 and reduces the possibility of secondary wrinkles after the wrinkle removing process of the pole piece 120 is completed.

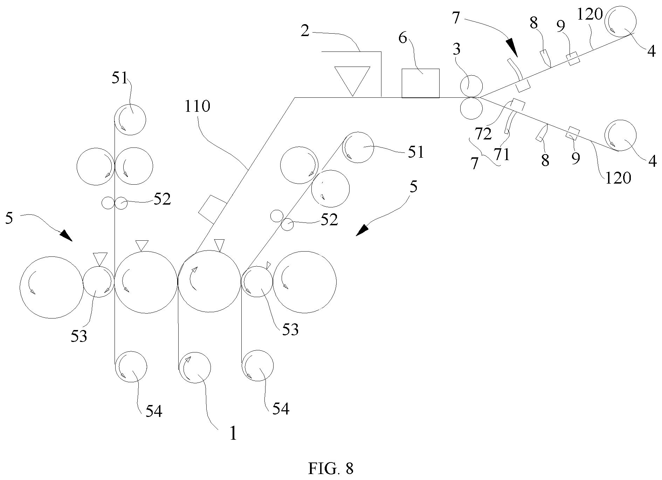

In some examples, as shown in FIG. 8, the pole piece forming apparatus further includes a burr treatment device 7 disposed between the slitting device 2 and the winding devices 4. The burr treatment device 7 is used for removing burrs from the slitting edge 120a of the pole piece 120. The risk of damage to the pole piece 120 caused by burrs is reduced.

The specific configuration of the burr treatment device 7 is not limited so long as burrs in the slitting edge 120a can be removed. In an alternative embodiment, the burr treatment device 7 includes a brush mechanism 71 and a dust collecting mechanism 72. The brush mechanism 71 is used to remove burrs of the slitting edge 120a. The dust collecting mechanism 72 is used to collect burrs removed by the brush mechanism 71. Specifically, the dust collecting mechanism 72 may be a negative pressure dust collecting mechanism or the like.

It can be understood that the burr removed by the brush mechanism 71 cannot be allowed to flow freely, and the dust collecting mechanism 72 should be used to collect it, so as to reduce the risk that burrs flow arbitrarily and affect the cleanliness of the production environment of the pole piece 120, and at the same time, it can reduce the risk that burrs fall on the surface of the pole piece 120 and puncture the pole piece 120 during the subsequent processing of the pole piece 120.

It can be understood that after the pole piece 120 is slitted, the conductive substance in it will be exposed in the external environment. For example, for the pole piece 120 after lithium replenishment, the lithium film at the slitting place of the pole piece 120 will be exposed in the external environment.

In order to avoid the exposure of the slitting edges 120a of the pole piece 120 and to reduce the risk of short circuiting of subsequent pole pieces 120, in some alternative examples, referring to FIG. 8, the pole piece forming apparatus further includes a glue application mechanism 8 and a drying device 9. The glue application mechanism 8 is provided between the burr treatment device 7 and the winding devices 4 for applying glue to the slitting edge 120a. The drying device 9 is arranged between the glue application mechanism 8 and the winding devices 4, for drying the pole piece 120 after glue application. Specifically, after the burr treatment is performed on the slitting edge 120a of the pole piece 120, the slitting edge 120a of the pole piece 120 is applied with glue, and the width of the glue application can be between 1 mm and 2 mm. After the glue application is completed, the glue layer formed after the glue application is dried by the drying device 9, and finally the pole piece 120 is wound up.

It will be understood that applying glue to the slitting edge 120a of the pole piece 120 not only reduces the risk of short circuit of the pole piece 120, but also further removes burrs from the slitting edge 120a.

Although the present invention has been described with reference to preferred examples, various modifications may be made thereto and components therein may be replaced with equivalents without departing from the scope of the present invention. In particular, the various technical features mentioned in the various examples may be combined in any manner so long as there is no structural conflict. The present invention is not limited to the specific examples disclosed herein but includes all technical solutions falling within the scope of the claims.

## Claims

1. A pole piece forming apparatus, comprising:
an incoming device (1) for providing a master pole piece;
a slitting device (2) for slitting the master pole piece into a plurality of pole pieces;
a plurality of winding devices (4) for transport pulling of the pole pieces, respective winding devices (4) winding one corresponding pole piece, and the slitting device (2) being disposed between the incoming device (1) and the winding devices (4); and
a wrinkle removing device (3) arranged between the slitting device (2) and the winding devices (4), wherein the wrinkle removing device (3) comprises a first roller (31) and a second roller (32) that are provided opposite to each other, the first roller (31) comprises a first rolling part (31a), and the first rolling part (31a) and the second roller (32) are for rolling an edge of a slitting edge of a corresponding pole piece,
**characterized in that**:
a diameter of the first rolling part (31a) increases along an axial direction of the first roller (31), and a portion of the first rolling part (31a) with the largest diameter is for rolling the edge of the slitting edge; and
a portion of the first roller (31) with a smaller diameter is closer to a middle position of the pole piece.

2. The pole piece forming apparatus according to claim 1, wherein the diameter of the first rolling part (31a) is changed from small to large by an arc transition structure or a step structure.

3. The pole piece forming apparatus according to claim 1, wherein in the axial direction of the first roller (31), the diameter of the first rolling part (31a) first is changed from small to large and then is changed from large to small.

4. The pole piece forming apparatus according to any one of claims 1 to 3, wherein the second roller (32) comprises a second rolling part (32a) opposite the first rolling part (31a), and a diameter of the second rolling part (32a) is changed from small to large in an axial direction of the second roller (32); and a portion with a largest diameter of the second roller (32) is opposite to the portion with the largest diameter of the first roller (31).

5. The pole piece forming apparatus according to any one of claims 1 to 4, wherein the first roller (31) is internally provided with a flow path (31b) for circulating a heat conductive medium, the heat conductive medium being for heat exchange with the first roller (31)

6. The pole piece forming apparatus according to claim 5, wherein the heat conductive medium is configured to exchange heat with the first roller (31) to maintain a surface temperature of the first roller (31) adjacent to the pole piece between 35°C and 40°C.

7. The pole piece forming apparatus according to claim 5 or 6, wherein the flow path (31b) is helically arranged about a centerline of the first roller (31).

8. The pole piece forming apparatus according to claim 7, wherein a minimum distance between the flow path (31b) and an outer surface of the first roller (31) is d, where 0<d ≤ 2 mm.

9. The pole piece forming apparatus according to any one of claims 1 to 8, further comprising:
a lithium replenishment device (5) arranged between the incoming device (1) and the slitting device (2), the lithium replenishment device (5) being for cladding a lithium strip to a surface of the master pole piece.

10. The pole piece forming apparatus according to any one of claims 1 to 9, further comprising: a deflection correcting device (6) for guiding a transport direction of the pole pieces, wherein
the deflection correcting device (6) is arranged between the slitting device (2) and the wrinkle removing device (3); and/or
the deflection correcting device (6) is arranged between the wrinkle removing device (3) and the winding devices (4).

11. The pole piece forming apparatus according to any one of claims 1 to 10, wherein
the pole piece forming apparatus further comprises a burr treatment device (7) disposed between the slitting device (2) and the winding devices (4), the burr treatment device (7) comprising:
a brush mechanism (71) for removing burrs of the slitting edges; and
a dust collecting mechanism (72) for collecting burrs removed by the brush mechanism (71).

12. The pole piece forming apparatus according to claim 11, further comprising:
a glue application mechanism (8) disposed between the burr treatment device (7) and the winding devices (4), for applying glue to the slitting edges; and
a drying device (9) arranged between the glue application mechanism (8) and the winding devices (4), for drying the pole piece after glue application.

## Patentansprüche

1. Vorrichtung zum Bilden von Polschuhen, die Folgendes umfasst:
eine Einfahreinrichtung (1) zum Bereitstellen eines Hauptpolschuhs;
eine Schlitzeinrichtung (2) zum Schlitzen des Hauptpolschuhs in eine Vielzahl von Polschuhen;
eine Vielzahl von Wickeleinrichtungen (4) zum Transportziehen der Polschuhe, wobei die Wickeleinrichtungen (4) jeweils einen entsprechenden Polschuh aufwickeln und die Schlitzeinrichtung (2) zwischen der Einfahreinrichtung (1) und den Wickeleinrichtungen (4) angeordnet ist; und
eine Faltenbeseitigungseinrichtung (3), die zwischen der Schlitzeinrichtung (2) und den Wickeleinrichtungen (4) angeordnet ist, wobei die Faltenbeseitigungseinrichtung (3) eine erste Walze (31) und eine zweite Walze (32) umfasst, die einander gegenüberliegend bereitgestellt sind, wobei die erste Walze (31) einen ersten Walzteil (31a) umfasst und der erste Walzteil (31a) und die zweite Walze (32) zum Walzen eines Rands eines Schlitzrands eines entsprechenden Polschuhs dienen,
**dadurch gekennzeichnet, dass**:
ein Durchmesser des ersten Walzteils (31a) entlang einer Axialrichtung der ersten Walze (31) zunimmt und ein Abschnitt des ersten Walzteils (31a) mit dem größten Durchmesser zum Walzen des Rands des Schlitzrands dient; und
ein Abschnitt der ersten Walze (31) mit einem kleineren Durchmesser näher an einer mittleren Stelle des Polschuhs liegt.

2. Vorrichtung zum Bilden von Polschuhen nach Anspruch 1, wobei der Durchmesser des ersten Walzteils (31a) durch eine Bogenübergangsstruktur oder eine Stufenstruktur von klein zu groß geändert wird.

3. Vorrichtung zum Bilden von Polschuhen nach Anspruch 1, wobei in der Axialrichtung der ersten Walze (31) der Durchmesser des ersten Walzteils (31a) zuerst von klein zu groß geändert wird und dann von groß zu klein geändert wird.

4. Vorrichtung zum Bilden von Polschuhen nach einem der Ansprüche 1 bis 3, wobei die zweite Walze (32) einen zweiten Walzteil (32a) gegenüber von dem ersten Walzteil (31a) umfasst und ein Durchmesser des zweiten Walzteils (32a) in einer Axialrichtung der zweiten Walze (32) von klein zu groß geändert wird; und ein Abschnitt mit einem größten Durchmesser der zweiten Walze (32) dem Abschnitt mit dem größten Durchmesser der ersten Walze (31) gegenüberliegt.

5. Vorrichtung zum Bilden von Polschuhen nach einem der Ansprüche 1 bis 4, wobei die erste Walze (31) innen mit einem Strömungspfad (31b) zum Umwälzen eines wärmeleitenden Mediums versehen ist, wobei das wärmeleitende Medium zum Wärmeaustausch mit der ersten Walze (31) dient.

6. Vorrichtung zum Bilden von Polschuhen nach Anspruch 5, wobei das wärmeleitende Medium dazu konfiguriert ist, Wärme mit der ersten Walze (31) auszutauschen, um eine Oberflächentemperatur der ersten Walze (31) dem Polschuh benachbart zwischen 35 °C und 40 °C aufrechtzuerhalten.

7. Vorrichtung zum Bilden von Polschuhen nach Anspruch 5 oder 6, wobei der Strömungspfad (31b) spiralförmig um eine Mittellinie der ersten Walze (31) angeordnet ist.

8. Vorrichtung zum Bilden von Polschuhen nach Anspruch 7, wobei ein Mindestabstand zwischen dem Strömungspfad (31b) und einer Außenoberfläche der ersten Walze (31) d ist, wobei 0 < d ≤ 2 mm.

9. Vorrichtung zum Bilden von Polschuhen nach einem der Ansprüche 1 bis 8, ferner umfassend:
eine Lithiumanreicherungseinrichtung (5), die zwischen der Einfahreinrichtung (1) und der Schlitzeinrichtung (2) angeordnet ist, wobei die Lithiumanreicherungseinrichtung (5) zum Aufziehen eines Lithiumbands auf eine Oberfläche des Hauptpolschuhs dient.

10. Vorrichtung zum Bilden von Polschuhen nach einem der Ansprüche 1 bis 9, ferner umfassend: eine Auslenkungskorrektureinrichtung (6) zum Führen einer Transportrichtung der Polschuhe, wobei
die Auslenkungskorrektureinrichtung (6) zwischen der Schlitzeinrichtung (2) und der Faltenbeseitigungseinrichtung (3) angeordnet ist; und/oder
die Auslenkungskorrektureinrichtung (6) zwischen der Faltenbeseitigungseinrichtung (3) und den Wickeleinrichtungen (4) angeordnet ist.

11. Vorrichtung zum Bilden von Polschuhen nach einem der Ansprüche 1 bis 10, wobei die Vorrichtung zum Bilden von Polschuhen ferner eine zwischen der Schlitzeinrichtung (2) und den Wickeleinrichtungen (4) angeordnete Gratbehandlungseinrichtung (7) umfasst, wobei die Gratbehandlungseinrichtung (7) Folgendes umfasst:
einen Bürstenmechanismus (71) zum Beseitigen von Graten der Schlitzränder; und
einen Staubauffangmechanismus (72) zum Auffangen von durch den Bürstenmechanismus (71) beseitigten Graten.

12. Vorrichtung zum Bilden von Polschuhen nach Anspruch 11, ferner umfassend:
einen zwischen der Gratbehandlungseinrichtung (7) und den Wickeleinrichtungen (4) angeordneten Klebstoffauftragemechanismus (8) zum Auftragen von Klebstoff auf die Schlitzränder; und
eine zwischen dem Klebstoffauftragemechanismus (8) und den Wickeleinrichtungen (4) angeordnete Trocknungseinrichtung (9) zum Trocknen des Polschuhs nach dem Auftragen von Klebstoff.

## Revendications

1. Appareil de formation de pièce de pôle, comprenant :
un dispositif d'entrée (1) destiné à fournir une pièce de pôle maîtresse ;
un dispositif de refente (2) destiné à refendre la pièce de pôle maîtresse en une pluralité de pièces de pôle ;
une pluralité de dispositifs d'enroulement (4) destinés à tirer pour les transporter les pièces de pôle, des dispositifs d'enroulement (4) respectifs enroulant une pièce de pôle correspondante, et le dispositif de refente (2) étant disposé entre le dispositif d'entrée (1) et les dispositifs d'enroulement (4) ; et
un dispositif de suppression de plis (3) agencé entre le dispositif de refente (2) et les dispositifs d'enroulement (4), le dispositif de suppression de plis (3) comprenant un premier rouleau (31) et un deuxième rouleau (32) qui sont disposés en regard l'un par rapport à l'autre, le premier rouleau (31) comprend une première partie de roulement (31a), et la première partie de roulement (31a) et le deuxième rouleau (32) servent à laminer un bord d'un bord de refente d'une pièce de pôle correspondante,
**caractérisé en ce que** :
un diamètre de la première partie de roulement (31a) augmente le long d'une direction axiale du premier rouleau (31), et une partie de la première partie de roulement (31a) ayant le plus grand diamètre est destinée à laminer le bord du bord de refente ; et
une partie du premier rouleau (31) ayant un diamètre plus petit est plus proche d'une position centrale de la pièce de pôle.

2. Appareil de formation de pièce de pôle selon la revendication 1, dans lequel le diamètre de la première partie de roulement (31a) passe de petit à grand par une structure de transition en arc ou une structure en gradin.

3. Appareil de formation de pièce de pôle selon la revendication 1, dans lequel dans la direction axiale du premier rouleau (31), le diamètre de la première partie de roulement (31a) commence par passer de petit à grand puis passe de grand à petit.

4. Appareil de formation de pièce de pôle selon l'une quelconque des revendications 1 à 3, dans lequel le deuxième rouleau (32) comprend une deuxième partie de roulement (32a) en regard de la première partie de roulement (31a), et un diamètre de la deuxième partie de roulement (32a) passe de petit à grand dans une direction axiale du deuxième rouleau (32) ; et une partie ayant le plus grand diamètre du deuxième rouleau (32) se trouve en regard de la partie ayant le plus grand diamètre du premier rouleau (31).

5. Appareil de formation de pièce de pôle selon l'une quelconque des revendications 1 à 4, dans lequel le premier rouleau (31) est pourvu à l'intérieur d'un trajet d'écoulement (31b) destiné à la circulation d'un fluide thermoconducteur, le fluide thermoconducteur étant destiné à échanger de la chaleur avec le premier rouleau (31).

6. Appareil de formation de pièce de pôle selon la revendication 5, dans lequel le fluide thermoconducteur est conçu pour échanger de la chaleur avec le premier rouleau (31) afin de maintenir une température de surface du premier rouleau (31) adjacente à la pièce de pôle entre 35 °C et 40 °C.

7. Appareil de formation de pièce de pôle selon la revendication 5 ou 6, dans lequel le trajet d'écoulement (31b) est agencé de manière hélicoïdale autour d'un axe central du premier rouleau (31).

8. Appareil de formation de pièce de pôle selon la revendication 7, dans lequel une distance minimale entre le trajet d'écoulement (31b) et une surface externe du premier rouleau (31) est d, avec 0 < d ≤ 2 mm.

9. Appareil de formation de pièce de pôle selon l'une quelconque des revendications 1 à 8, comprenant en outre :
un dispositif de réapprovisionnement en lithium (5) agencé entre le dispositif d'entrée (1) et le dispositif de refente (2), le dispositif de réapprovisionnement en lithium (5) étant destiné à plaquer une bande de lithium sur une surface de la pièce de pôle maîtresse.

10. Appareil de formation de pièce de pôle selon l'une quelconque des revendications 1 à 9, comprenant en outre : un dispositif de correction de déviation (6) destiné à guider une direction de transport des pièces de pôle, dans lequel
le dispositif de correction de déviation (6) est agencé entre le dispositif de refente (2) et le dispositif de suppression de plis (3) ; et/ou
le dispositif de correction de déviation (6) est agencé entre le dispositif de suppression de plis (3) et les dispositifs d'enroulement (4).

11. Appareil de formation de pièce de pôle selon l'une quelconque des revendications 1 à 10, dans lequel
l'appareil de formation de pièce de pôle comprend en outre un dispositif d'ébarbage (7) disposé entre le dispositif de refente (2) et les dispositifs d'enroulement (4), le dispositif d'ébarbage (7) comprenant :
un mécanisme à brosse (71) destiné à supprimer des bavures des bords de refente ; et
un mécanisme de collecte de poussière (72) destiné à collecter les bavures supprimées par le mécanisme à brosse (71).

12. Appareil de formation de pièce de pôle selon la revendication 11, comprenant en outre :
un mécanisme d'application de colle (8) disposé entre le dispositif d'ébarbage (7) et les dispositifs d'enroulement (4), destiné à appliquer une colle aux bords de refente ; et
un dispositif de séchage (9) agencé entre le mécanisme d'application de colle (8) et les dispositifs d'enroulement (4), destiné à sécher la pièce de pôle après encollage.
